# EUROPÄISCHE PATENTSCHRIFT

(11) **EP 4 030 086 B1**
(45) Veröffentlichungstag und Bekanntmachung des Hinweises auf die Patenterteilung: **17.07.2024**
(21) Anmeldenummer: 21151495.5
(22) Anmeldetag: 14.01.2021
(51) Int. Cl.: F16K 15/14

(54) **RÜCKSCHLAGVENTIL**
RETURN VALVE
CLAPET ANTI-RETOUR

(43) Veröffentlichungstag der Anmeldung: 20.07.2022
(73) Patentinhaber: AVS, Ingenieur J.C. Römer GmbH, 94481 Grafenau (DE)
(72) Erfinder: Haselwarter, Wolfgang, 94154 Neukirchen vorm Wald (DE)
(74) Vertreter: Wolf, Gerhard

(56) Entgegenhaltungen:
- EP-A1- 3 498 925
- CH-B1- 710 071
- FR-A- 1 230 233
- KR-U- 960 035 013
- US-A- 3 473 561
- US-A- 3 905 392

## Beschreibung

Die Erfindung betrifft ein Rückschlagventil, insbesondere für fluidführende Anwendungen im Lebensmittelbereich, beispielsweise für Getränkeautomaten, Kaffeemaschinen etc.

Rückschlagventile sind grundsätzlich bekannt. Sie weisen einen federbelasteten Ventilstößel auf, der in dem Ventilgehäuse verschiebbar geführt ist. Durch einen in Sollfließrichtung anliegenden Fluiddruck wird der Ventilkörper entgegen der Federkraft von der Dichtlage abgehoben, so dass das Fluid das Ventil durchfließen kann. Ein Rückfließen von Fluid entgegen der Sollfließrichtung wird wirksam verhindert, da ohne Fluiddruck zwischen Einlass und Auslass des Ventils der Ventilkörper durch die Federbelastung wieder in die Dichtlage bewegt wird.

Ein wesentlicher Nachteil derartiger Rückschlagventile besteht zum einen darin, dass diese einen komplexen Aufbau aufweisen und damit teuer in der Herstellung sind, zu anderen deren Verwendung in hygienesensitiven Anwendungen, beispielsweise im Lebensmittelbereich, insbesondere in Kaffeemaschinen, aufgrund der Verschmutzungen im Bereich der vom Fluid umflossenen Feder problematisch ist.

Zudem sind sog. Entenschnabel-Ventile (auch als Duckbill-Ventil bezeichnet) bekannt, die konzeptbedingt den Durchfluss sehr stark einschränken und eine geringe Rückschlagbelastbarkeit aufweisen. Bei hohen Rückschlagbelastungen kann sogar ein Umstülpen des Entenschnabel-Ventils erfolgen.

Die Druckschrift EP 3 498 925 A1 offenbart eine Geruchsverschlussvorrichtung für eine Sanitärvorrichtung mit einer Dichtmembran.

Die Druckschrift CH 710 071 B1 offenbart einen Geruchsverschluss für einen Sanitärwasserabfluss.

Die Druckschriften US 3 473 561 A und KR 960 035 013 U offenbaren jeweils ein Rückschlagventil mit einem elastisch verformbaren Dichtelement.

Die Druckschrift US 3,905,392 A offenbart ein Alarm-Rückschlagventil Mit einem Konus, der einen Ventilsitz für eine Membran ausbildet. In dem Konus sind Öffnungen vorgesehen, die die Wandung des Konus durchdringen.

Die Druckschrift FR 1 230 233 A offenbart eine Vorrichtung zur Verhinderung des Rückflusses in Wasserzählern.

Ausgehend hiervon ist es Aufgabe der Erfindung, ein Rückschlagventil anzugeben, das einen einfachen Aufbau aufweist und damit kostengünstig herstellbar ist und darüber hinaus zudem die Gefahr von Verschmutzungen im Inneren des Rückschlagventils minimiert ist. Zudem soll die Rückschlagventil-bedingte Einschränkung des Durchflusses im Vergleich zu Entenschnabelventilen reduziert sein.

Die Aufgabe wird durch ein Rückschlagventil mit den Merkmalen des unabhängigen Patentanspruchs 1 gelöst. Bevorzugte Ausführungsformen sind Gegenstand der Unteransprüche.

Gemäß einem Aspekt bezieht sich die Erfindung auf ein Rückschlagventil. Das Rückschlagventil umfasst einen Einlass, einen Auslass und ein zwischen dem Einlass und dem Auslass angeordnetes, elastisch verformbares Verschlussteil, das dazu ausgebildet ist, ein Rückfließen des Fluids von dem Auslass zu dem Einlass zu verhindern. Ein erster Ventilabschnitt bildet einen Ventilsitz für das Verschlussteil aus. In diesem ersten Ventilabschnitt ist vorzugsweise auch der Einlass vorgesehen. Das Verschlussteil ist kappenartig bzw. hutartig ausgebildet. Bevorzugt ist das Verschlussteil konisch ausgebildet, wobei sich das Verschlussteil in Fließrichtung des Fluids aufweitet. Insbesondere ist das Verschlussteil im Längsquerschnitt (d.h. die Schnittebene verläuft durch die Mittellängsachse des Rückschlagventils) parabelförmig ausgebildet, wobei die Öffnung der Parabel in Richtung Auslass zeigt. Es weist einen Verschlussteilboden und eine vom dem Verschlussteilboden einseitig abstehende Verschlussteilwandung mit einem dem Verschlussteilboden gegenüberliegenden Verschlussteilrand auf. Aufgrund der konischen Ausbildung weitet sich das Verschlussteil vom Verschlussteilboden in Richtung des Verschlussteilrands hin auf. Vorzugsweise ist das Verschlussteil, abgesehen von der am Verschlussteilrand vorgesehenen Öffnung umfangsseitig entlang der Verschlussteilwandung und am Verschlussteilboden geschlossen ausgebildet. Dadurch wird vorzugsweise im Verschlussteil ein Innenraum gebildet, der zum Einlass hin geschlossen ist. Im ersten Ventilabschnitt sind Überströmkanäle vorgesehen. Diese Überströmkanäle sind derart ausgebildet, dass die Verschlussteilwandung durch das Fluid vom Einlass her über eine Teillänge umflossen und durch die Überströmkanäle auf die Verschlussteilwandung geleitet wird, so dass diese Verschlussteilwandung durch den Fluiddruck zumindest abschnittsweise deformiert und damit vom Ventilsitz abgehoben wird. Die Überströmkanäle verlaufen vorzugsweise mit deren Längserstreckung in Fließrichtung schräg nach außen (wobei sich "außen" auf die radiale Richtung von einer Mittellängsachse des Rückschlagventils weg bezieht).

Der technische Vorteil des Rückschlagventils besteht darin, dass dieses durch einen einfachen Aufbau kostengünstig herstellbar ist und darüber hinaus ohne Rückstellfedern auskommt, so dass die Gefahr von Verschmutzungen im Fluidkanal des Rückschlagventils minimiert ist. Die Überströmkanäle, die ein Umfließen der Verschlussteilwandung entlang einer Teillänge ermöglichen, haben den technischen Vorteil, dass der Krafteintrag auf die Verschlussteilwandung nicht im Bereich des Verschlussteilbodens erfolgt, sondern in einem Bereich zwischen Verschlussteilboden und Verschlussteilrand, so dass das Öffnungsverhalten des Rückschlagventils verbessert wird.

Im Vergleich zu bekannten Entenschnabelventilen bietet das Rückschlagventil den Vorteil, dass das Material des Verschlussteils nicht gedehnt werden muss, sondern das Verschlussteil lediglich verformt werden muss. Aufgrund der Aufweitung des Verschlussteils in Fließrichtung wird ein geringer Fließwiderstand erreicht und das Verschlussteil kann sich bei Rückschlagbelastung nicht umstülpen.

Gemäß der Erfindung verlaufen die Überströmkanäle zumindest abschnittsweise entlang der den Ventilsitz bildenden Innenfläche des ersten Ventilabschnitts und sind zu dieser Innenfläche hin offen ausgebildet. Dadurch wird erreicht, dass das vom Einlass her in das Rückschlagventil einströmende Fluid in die Überströmkanäle einfließen und dabei die Verschlussteilwandung partiell hinterströmen kann. Durch das einströmende Fluid wird entlang der Überströmkanäle ein Druck auf die Verschlussteilwandung appliziert, was das Öffnungsverhalten des Rückschlagventils zusätzlich verbessert.

Gemäß einem Ausführungsbeispiel weist das Verschlussteil Deformierungsbereiche auf, die dazu ausgebildet sind, sich bei Anliegen eines Fluiddrucks am Einlass von dem Ventilsitz abzuheben. In anderen Worten wird beim Öffnen des Rückschlagventils nicht die gesamte Verschlussteilwandung von der den Ventilsitz bildenden Innenfläche des ersten Ventilabschnitts abgehoben sondern es erfolgt lediglich ein partielles Abheben an bestimmten Bereichen der Verschlussteilwandung. Die Deformierungsbereiche, an denen das Abheben erfolgt, sind vorzugsweise winkelmäßig verteilt entlang des Umfangs der Verschlussteilwandung vorgesehen. Dadurch wird ein definiertes Öffnungsverhalten des Ventils bei gleichzeitig hoher Lage- bzw. Ausrichtungsstabilität erreicht.

Gemäß einem Ausführungsbeispiel sind der Ventilsitz und das Verschlussteil in einer senkrecht zur Fließrichtung verlaufenden Querschnittsebene rotationsunsymmetrisch ausgebildet. Dadurch wird erreicht, dass sich das Verschlussteil nicht um eine Achse parallel oder im Wesentlichen parallel zur Fließrichtung des Fluids in dem Rückschlagventil verdrehen kann. Diese Verdrehsicherung wird beispielsweise zudem unterstützt durch das lediglich partielle Abheben der Verschlussteilwandung an bestimmten Bereichen, nämlich den Deform ierungsbereichen.

Zudem kann vorzugsweise eine Verdrehsicherung dadurch erreicht werden, dass ein vorderer Abschnitt des Verschlussteils, beispielsweise ein Abschnitt der unmittelbar an den Verschlussteilboden anschließt und im Übergangsbereich zwischen der Öffnung des ersten Ventilabschnitts und den Überströmkanälen liegt, auch bei Verformung der Deformierungsbereiche an dem ersten Ventilabschnitt anliegen bleibt und aufgrund der Rotationsunsymmetrie ein Verdrehen verhindert.

Gemäß einem Ausführungsbeispiel weist das Verschlussteil in einer senkrecht zur Fließrichtung verlaufenden Querschnittsebene in den Deformierungsbereichen konvexe Wölbungen mit einem größeren Radius als in den zwischen den Deformierungsbereichen liegenden Übergangsbereichen auf. Dadurch wird erreicht, dass das Deformieren der Verschlussteilwandung lediglich in den Deformierungsbereichen erfolgt, da die durch den kleineren Wölbungsradius entstehende größere Krümmung in den Übergangsbereichen die Verformbarkeit der Verschlussteilwandung dort reduziert.

Gemäß einem Ausführungsbeispiel weisen die Deformierungsbereiche des Verschlussteils zumindest teilweise eine größere Wandstärke auf als zwischen den Deformierungsbereichen liegende Übergangsbereiche. Dadurch werden die Deformierungsbereiche, die durch die Verformung mechanisch belastet sind, verstärkt, so dass die Lebensdauer des Rückschlagventils erhöht wird.

Gemäß einem Ausführungsbeispiel ist das Verschlussteil derart ausgebildet, dass beim Abheben der Deformierungsbereiche die Übergangsbereiche zumindest partiell an der den Ventilsitz bildenden Innenfläche des ersten Ventilabschnitts anliegen. Dadurch wird die Lagestabilität des Verschlussteils und die Gefahr eines Verdrehens gegenüber dem Ventilsitz entscheidend reduziert.

Vorzugsweise weist die den Ventilsitz bildende Innenfläche der Ausnehmung des ersten Ventilabschnitts in den Bereichen, an denen jeweils die Übergangsbereiche des Verschlussteils zur Anlage gelangen, ebenfalls konvexe Wölbungen mit einem kleineren Radius als in den Deformierungsbereichen auf. Dadurch werden an der den Ventilsitz bildenden Innenfläche der Ausnehmung Einbuchtungen gebildet, in denen die Übergangsbereiche des Verschlussteils beim Abheben der Deformierungsbereiche verbleiben. Dies bewirkt eine Verdrehsicherung des Verschlussteils bei geöffnetem Rückschlagventil.

Gemäß einem Ausführungsbeispiel weist das Verschlussteil einen Reuleaux-Dreieck-ähnlichen Querschnitt mit abgerundeten Ecken auf. Diese Querschnittsform ermöglicht zum einen eine gute Verformbarkeit der Deformierungsbereiche, die zwischen den abgerundeten Ecken des Reuleaux-Dreiecks liegen, zum anderen bewirken die abgerundeten Ecken des Reuleaux-Dreiecks eine hohe Lagestabilität und Verdrehsicherheit des Verschlussteils.

Die Rotationsunsymmetrie des Verschlussteils kann jedoch auch mit einer anderen Querschnittsform erreicht werden, beispielsweise mit einem vieleckartigen Verschlussteil mit lediglich zwei abgerundeten Eckbereichen oder mit mehr als drei abgerundeten Eckbereichen.

Gemäß einem Ausführungsbeispiel ist das Verschlussteil ohne äußere Krafteinwirkung an die den Ventilsitz bildende Innenfläche des ersten Ventilabschnitts formangepasst. Dadurch wird eine großflächige Anlage des Verschlussteils an den Ventilsitz und damit eine hohe Dichtigkeit des Rückschlagventils erreicht.

Gemäß einem Ausführungsbeispiel sind die Überströmkanäle im Bereich der Deformierungsbereiche angeordnet, und zwar derart, dass jeweils zumindest ein Überströmkanal direkt benachbart zu einem Deformierungsbereich liegt. Vorzugsweise liegt zumindest ein Überströmkanal in radialer Richtung gesehen unmittelbar außerhalb des jeweiligen Deformierungsbereichs. Dadurch wird erreicht, dass das in die Überströmkanäle einfließende Fluid unmittelbar auf den Deformierungsbereich einwirken kann, um dessen Abheben vom Ventilsitz zu bewirken.

Vorzugsweise sind an den Deformierungsbereichen jeweils mehrere Überströmkanäle vorgesehen. Weiterhin vorzugsweise sind diese umfangsseitig lagemäßig gruppiert an den jeweiligen Deformierungsbereichen vorgesehen. Dadurch wird erreicht, dass bei gleichbleibendem Fluiddruck die Krafteinwirkung auf die Deformierungsbereiche erhöht ist.

Gemäß einem Ausführungsbeispiel ist eine Fixiereinrichtung mit zumindest einem ersten und einem zweiten Fixiereinrichtungsabschnitt vorgesehen ist, wobei der erste Fixiereinrichtungsabschnitt zumindest teilweise in einen Innenraum des kappenartig ausgebildeten Verschlussteils hineinreicht und mit seinem freien Ende gegenüber der Innenseite des Verschlussteilbodens anliegt. Die Fixiereinrichtung sichert damit das Verschlussteil an der dem Einlass gegenüberliegenden Innenseite des Verschlussteilbodens gegen axiales Verschieben.

Gemäß einem Ausführungsbeispiel steht der zweite Fixiereinrichtungsabschnitt radial gegenüber dem ersten Fixiereinrichtungsabschnitt über und ist zur Positionierung der Fixiereinrichtung im Fluidkanal des Rückschlagventils ausgebildet. Dadurch wird die Fixiereinrichtung lagemäßig gegenüber den übrigen Bauteilen des Rückschlagventilen fixiert, insbesondere gegenüber dem den Ventilsitz bildenden ersten Ventilabschnitt.

Gemäß einem Ausführungsbeispiel weist der zweite Fixiereinrichtungsabschnitt Durchlassöffnungen auf, über die das Fluid durch die Fixiereinrichtung hindurchfließen kann. Der zweite Fixiereinrichtungsabschnitt kann beispielsweise speichenradartig ausgebildet sein, d.h. mehrere von der Mittellängsachse radial nach außen abstehende Speichen aufweisen, zwischen denen jeweils eine oder mehrere Durchlassöffnungen vorgesehen sind. Dadurch wird ein möglichst verlustfreies Durchfließen des zweiten Fixiereinrichtungsabschnitts erreicht.

Gemäß einem Ausführungsbeispiel weist das Verschlussteil einen außenseitig am Verschlussteilboden angeordneten und in Richtung des Einlasses abstehenden Fortsatz auf. Der Fortsatz ist beispielsweise in Richtung des Einlasses zulaufend ausgebildet, insbesondere konisch oder im Wesentlichen konisch zulaufend. Der Fortsatz bewirkt eine gezielte Richtungsänderung des einströmenden Fluids in Richtung der Überströmkanäle und führt damit zu einer Reduzierung des Strömungswiderstand bei geöffnetem Rückschlagventil.

Gemäß einem Ausführungsbeispiel sind der erste Ventilabschnitt, ein zweiter Ventilabschnitt und/oder die Fixiereinrichtung Kunststoffspritzgussteile. Beispielsweise sind der erste Ventilabschnitt, der zweite Ventilabschnitt und/oder die Fixiereinrichtung einstückig ausgebildet. Der erste Ventilabschnitt bildet beispielsweise sowohl den Einlass des Rückschlagventils und weist vorzugsweise eine Schnittstelle für einen Schlauchanschluss, einen Abschnitt des Fluidkanals und die Ausnehmung auf, deren Innenfläche den Ventilsitz für das Verschlussteil bildet. Zudem sind in dem einstückig ausgebildeten, ersten Ventilabschnitt vorzugsweise die Überströmkanäle vorgesehen, und zwar weiterhin vorzugsweise als längliche Gräben oder Einkerbungen in der den Ventilsitz bildenden Innenfläche. Die Überströmkanäle sind vorzugsweise zur Mittellängsachse des Rückschlagventils hin offen ausgebildet.

Das Rückschlagventil kann als Ventil zur Steuerung des Fluidflusses von Flüssigkeiten, von Gasen oder dampfförmigen Medien verwendet werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft Längsschnitt durch ein Rückschlagventil entlang einer ersten Schnittebene A-A;
- Fig. 2: beispielhaft Längsschnitt durch das Rückschlagventil gemäß Fig. 1 entlang einer zweiten Schnittebene C-C, die orthogonal zur ersten Schnittebene A-A der Fig. 1 verläuft;
- Fig. 3: beispielhaft eine Explosionsdarstellung von Teilen eines Rückschlagventils gemäß der Ausführungsform der Figuren 1 und 2, wobei der erste Ventilabschnitt lediglich abschnittsweise dargestellt ist;
- Fig. 4: beispielhaft eine Schnittdarstellung des Rückschlagventils gemäß Fig. 1 entlang der Schnittlinie B1-B1;
- Fig. 5: beispielhaft eine Schnittdarstellung des Rückschlagventils gemäß Fig. 2 entlang der Schnittlinie B2-B2;
- Fig. 6: beispielhaft eine Schnittdarstellung des Rückschlagventils gemäß Fig. 1 entlang der Schnittlinie B3-B3;
- Fig. 7: beispielhaft eine Schnittdarstellung des Rückschlagventils gemäß Fig. 2 entlang der Schnittlinie B4-B4;
- Fig. 8: beispielhaft eine Schnittdarstellung des Rückschlagventils gemäß Fig. 1 entlang der Schnittlinie B5-B5;
- Fig. 9: beispielhaft eine Schnittdarstellung des Rückschlagventils gemäß Fig. 2 entlang der Schnittlinie B6-B6;
- Fig. 10: beispielhaft eine Schnittdarstellung des Rückschlagventils gemäß Fig. 1 entlang der Schnittlinie B7-B7;
- Fig. 11: beispielhaft eine Schnittdarstellung des Rückschlagventils gemäß Fig. 2 entlang der Schnittlinie B8-B8.

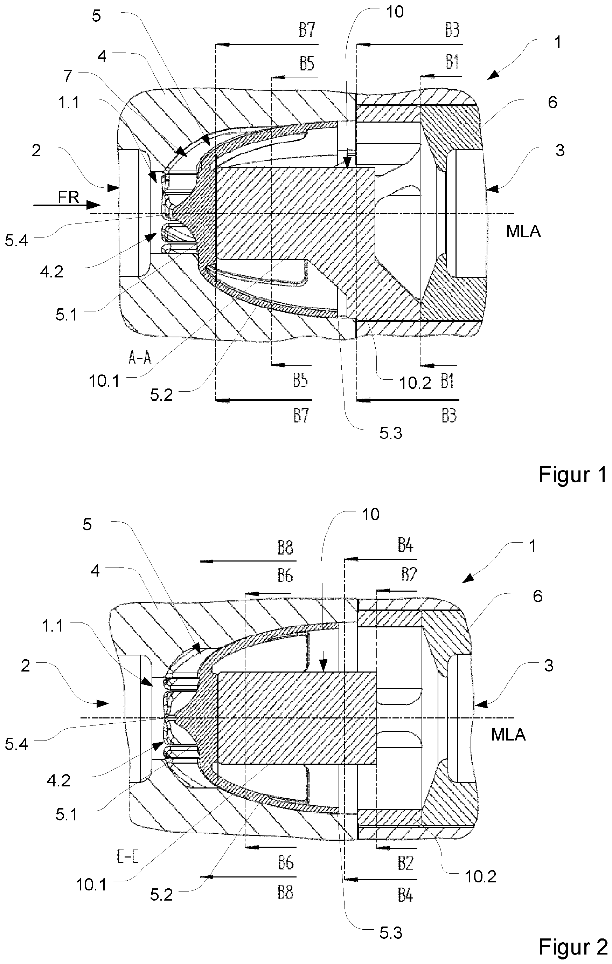

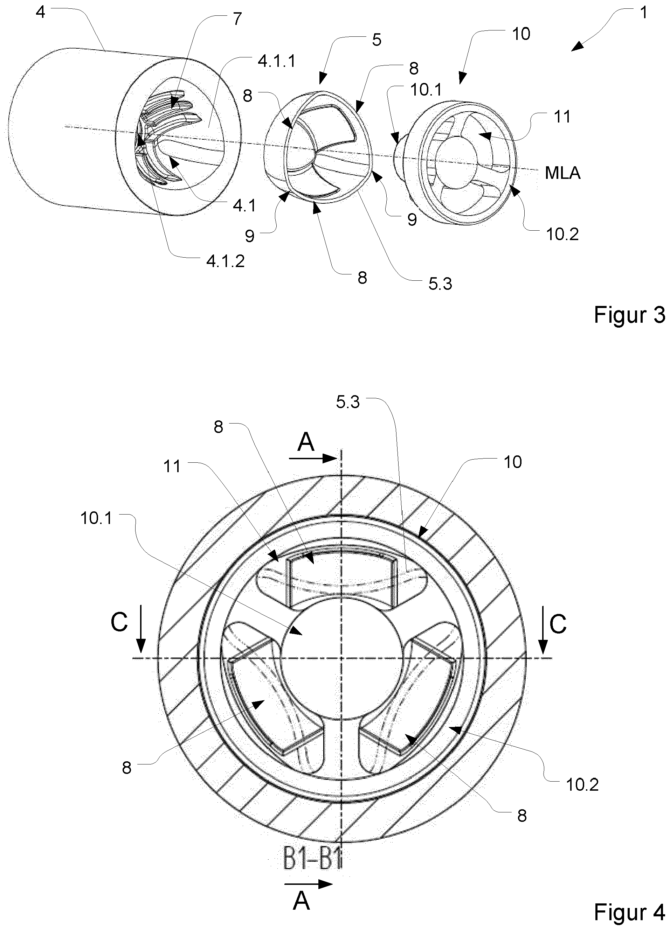

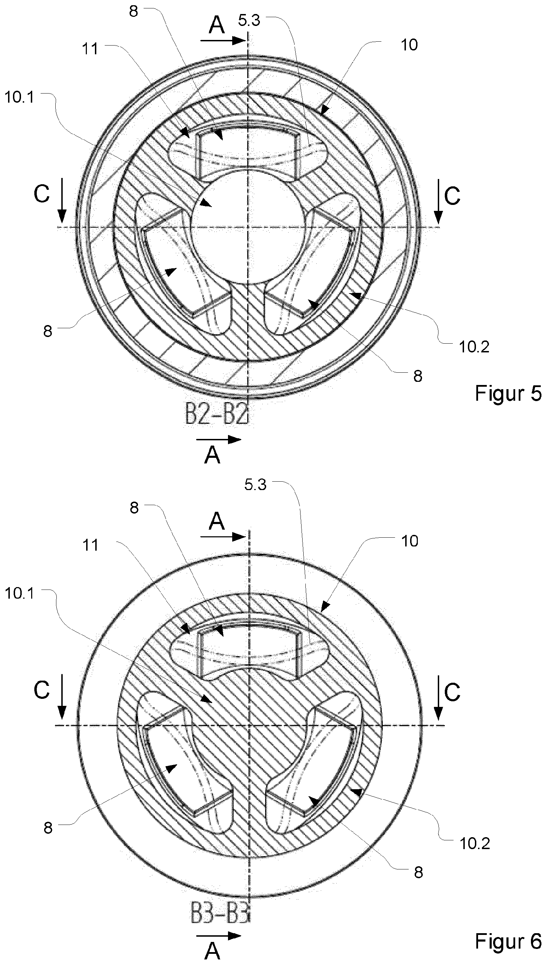

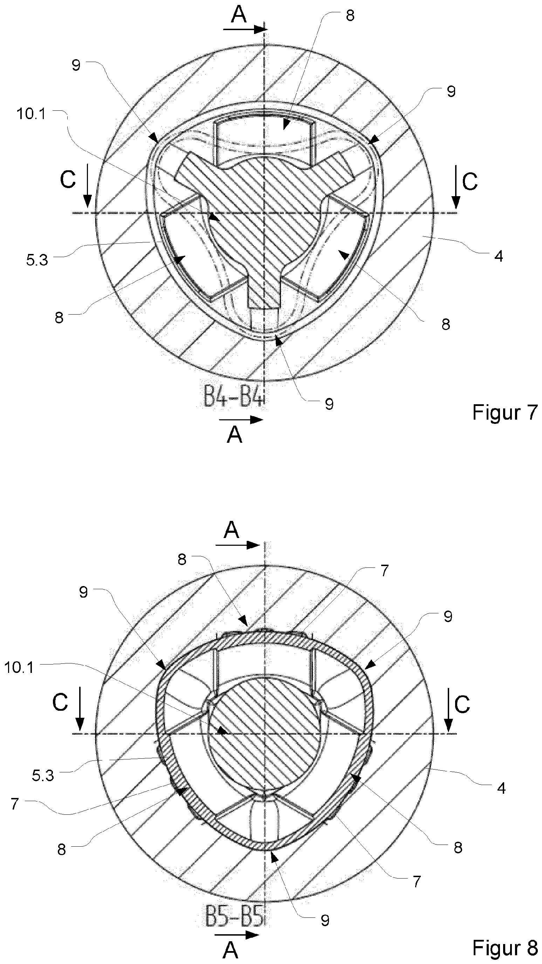

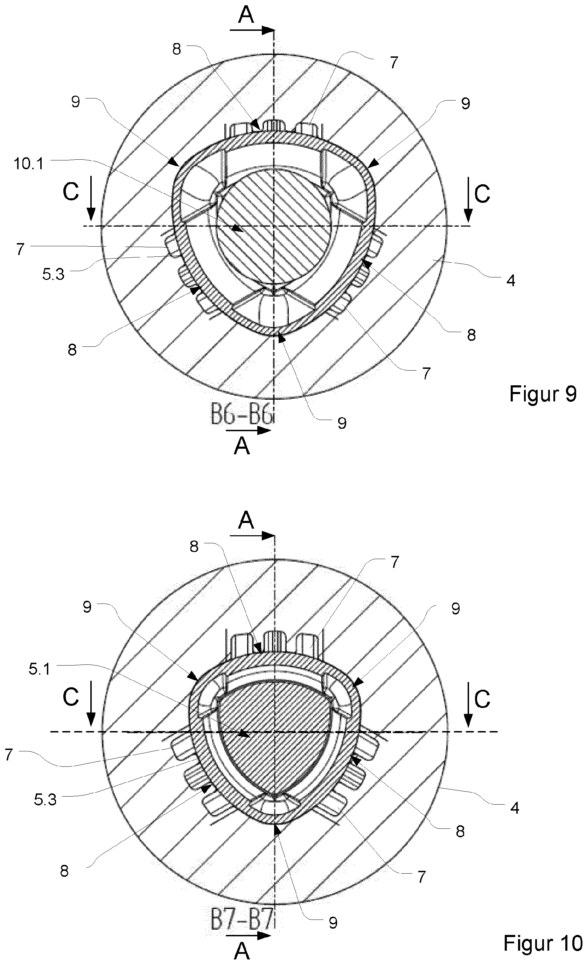

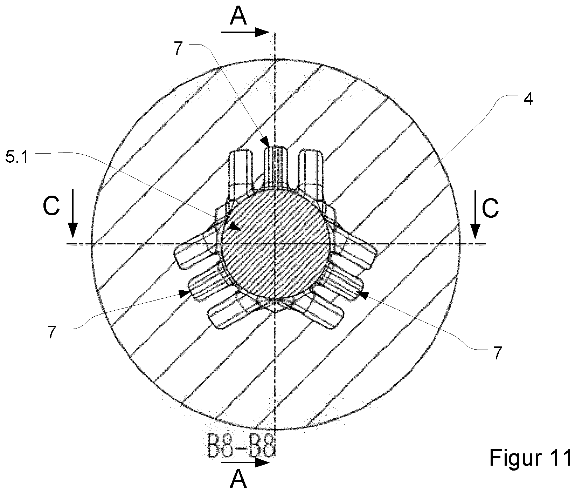

Figuren 1 und 2 zeigen jeweils Längsschnittdarstellungen durch ein Rückschlagventil 1, wobei die Schnittebene C-C der Figur 2 um 90° zu der Schnittebene A-A der Fig. 1 gedreht ist. Die Lage der Schnittebenen A-A und C-C ist jeweils den Figuren 4 bis 11 zu entnehmen.

Das Rückschlagventil 1 umfasst einen Einlass 2 und einen in Fließrichtung FR stromabwärts liegenden Auslass 3, die über einen Fluidkanal 1.1 miteinander verbunden sind, so dass ein Fluid vom Einlass 2 durch den Fluidkanal zum Auslass 3 fließen kann. Die Fließrichtung FR verläuft vorzugsweise entlang der Mittellängsachse MLA des Rückschlagventils 1.

Das Rückschlagventil 1 ist mehrteilig aufgebaut. Das gezeigte Ausführungsbeispiel umfasst zumindest einen ersten Ventilabschnitt 4, einen zweiten Ventilabschnitt 6, ein Verschlussteil 5 und eine Fixiereinrichtung 10 zur Fixierung des Verschlussteils 5.

Wie insbesondere in Fig. 3 zu erkennen ist, weist der erste Ventilabschnitt 4 eine napfartig ausgebildete Ausnehmung 4.1 auf, die im Bodenbereich eine Öffnung 4.2 aufweist. Die Öffnung 4.2 ist über einen Fluidkanalabschnitt mit dem Einlass 2 verbunden. Dadurch kann ein Fluid vom Einlass 2 her in den Bodenbereich der Ausnehmung 4.1 einfließen.

Die Innenfläche 4.1.1 der Ausnehmung 4.1 bildet zumindest abschnittsweise den Ventilsitz für das Verschlussteil 5, das im zusammengebauten Zustand des Rückschlagventils 1 in die Ausnehmung 4.1 eingesetzt ist.

Das Verschlussteil 5 ist kappenartig bzw. fingerhutartig ausgebildet und weist einen Verschlussteilboden 5.1 und eine vom Verschlussteilboden 5.1 schräg nach oben bzw. im eingebauten Zustand schräg in Fließrichtung FR abstehende Verschlussteilwandung 5.2 auf. Das Verschlussteil 5 ist aus einem elastischen Material gefertigt und damit reversibel verformbar. Die Verschlussteilwandung 5.2 ist insbesondere derart geformt, dass diese ohne Einwirkung äußerer Kräfte, d.h. insbesondere ohne Fluiddruck am Einlass 2, an der Innenfläche 4.1.1 der Ausnehmung 4.1, d.h. dem Ventilsitz anliegt. Dazu ist der Verlauf der Verschlussteilwandung 5.2 in Fließrichtung FR gesehen und die Umfangskontur des Verschlussteils 5 im Bereich der Verschlussteilwandung 5.2 an den Verlauf bzw. die Umfangskontur der Ausnehmung 4.1 angepasst, so dass die Verschlussteilwandung 5.2 zumindest im Bereich des Verschlussteilrands 5.3 und dem daran angrenzenden Randbereich der Verschlussteilwandung 5.2 flächig an der Innenfläche 4.1.1 der Ausnehmung 4.1 anliegt.

Bei Anliegen eines Fluiddrucks am Einlass 2 kann das Verschlussteil 5 partiell deformiert werden und sich vom Dichtsitz, d.h. der Innenfläche 4.1.1 der Ausnehmung 4.1 abheben, so dass das Fluid vom Einlass 2 über das Verschlussteil 5 hinweg zum Auslass 3 fließen kann. In umgekehrter Weise wird ein Rückfluss des Fluids von dem Auslass 3 zum Einlass 2 durch das Verschlussteil 5 verhindert, da die Verschlussteilwandung 5.2 dichtend an der Innenfläche 4.1.1 der Ausnehmung 4.1 anliegt. Ein zwischen dem Auslass 3 und dem Einlass 2 bestehender Druckunterschied verstärkt zudem den Dichtsitz der Verschlussteilwandung 5.2 an der Innenfläche 4.1.1 der Ausnehmung 4.1.

Im Bereich der Innenfläche 4.1.1 der Ausnehmung 4.1 sind im ersten Ventilabschnitt 4 mehrere Überströmkanäle 7 vorgesehen. Die Überströmkanäle 7 sind vorzugsweise länglich ausgebildet und erstrecken sich mit deren Längsrichtung entlang der Innenfläche 4.1.1 der Ausnehmung 4.1. Die Überströmkanäle 7 weisen beispielsweise ein erstes Ende im Bodenbereich 4.1.2 der Ausnehmung 4.1, in dem auch die Öffnung 4.2 vorgesehen ist, auf. Das zweite Ende der länglich ausgebildeten Überströmkanäle 7 liegt vom Bodenbereich 4.1.2 der Ausnehmung 4.1 beabstandet im Bereich der Innenfläche 4.1.1 der Ausnehmung 4.1 in Fließrichtung gesehen vor dem Verschlussteilrand 5.3, so dass das Fluid vom Bodenbereich 4.1.2 der Ausnehmung 4.1 kommend die Verschlussteilwandung 5.2 über eine Teillänge hinterströmen kann und in Fließrichtung gesehen zwischen dem Verschlussteilboden 5.1 und dem Verschlussteilrand 5.3 auf die Verschlussteilwandung 5.2 geleitet wird.

Im gezeigten Ausführungsbeispiel sind die Überströmkanäle 7 grabenartig ausgebildet und insbesondere zur Ausnehmung 4.1 hin offen ausgebildet, so dass ein in den Überströmkanal 7 eingeleitetes, unter Druck stehendes Fluid über die Länge des Überströmkanals 7 hinweg einen partiellen Druck auf die Verschlussteilwandung 5.2 ausüben kann und dadurch ein partielles Verformen des Verschlussteils 5 erreicht wird.

Alternativ können die Überströmkanäle 7 auch zur Ausnehmung 4.1 hin eine Wandung und lediglich einen oder mehrere Öffnungen in dieser Wandung aufweisen, aus denen das unter Druck stehende Fluid austreten kann und auf die Verschlussteilwandung 5.2 geleitet wird, um diese partiell vom Dichtsitz abzuheben. Auch in dieser Ausführung erstrecken sich die Überströmkanäle 7 über eine Teillänge des Verschlussteils 5.2 (in Fließrichtung gesehen), so dass das unter Druck stehende Fluid über eine Teillänge das Verschlussteil 5.2 hinterströmen kann. Dadurch wird ein vorteilhaftes Abheben der Verschlussteilwandung 5.2 von dem Ventilsitz erreicht.

Vorzugsweise bildet der erste Ventilabschnitt 4 zum einen einen Abschnitt des Gehäuses des Rückschlagventils 1 aus und begrenzt dabei durch dessen Wandung zumindest auf einer Teillänge den Fluidkanal 1.1 nach außen hin, zum anderen formt der erste Ventilabschnitt 4 gleichzeitig den Ventilsitz für das Verschlussteil 5. Dies ermöglicht eine kostengünstige Herstellung des Rückschlagventils 1. Vorzugsweise ist der erste Ventilabschnitt 4 ein Spritzgussteil. Insbesondere ist der erste Ventilabschnitt 4 ein einstückig gefertigtes Spritzgussteil, in dem die Überströmkanäle 7 als längliche Aussparungen im Bereich der Innenfläche 4.1.1 der Ausnehmung 4.1 vorgesehen sind.

Nachfolgend wird die körperliche Ausgestaltung des Verschlussteils 5 näher beschrieben. Wie insbesondere in den Fig. 3 bis 11 zu erkennen ist, weist das Verschlussteil 5 eine rotationsunsymmetrische Umfangskontur auf, wobei sich "Umfangskontur" auf die Umfangsform der Verschlussteilwandung 5.2 in einer senkrecht zur Mittellängsachse MLA verlaufenden Schnittebene bezieht. Die Umfangskontur der Ausnehmung 4.1 des ersten Ventilabschnitts 4 in einer senkrecht zur Mittellängsachse MLA verlaufenden Schnittebene ist ebenfalls rotationsunsymmetrisch und an die Umfangskontur der Verschlussteilwandung 5.2 formangepasst, so dass die Verschlussteilwandung 5.2 beim Einsetzen des Verschlussteils 5 in den ersten Ventilabschnitt 4 umfangsseitig an der Innenfläche 4.1.1 anliegt.

Durch die Rotationsunsymmetrie wird erreicht, dass sich das Verschlussteil 5 nicht um eine entlang der Fließrichtung FR verlaufende Drechachse verdrehen kann, d.h. in der Ausnehmung 4.1 rotationsgesichert ist.

Im gezeigten Ausführungsbeispiel weist das Verschlussteil 5 einen Reuleaux-Dreieck-ähnlichen Querschnitt im Bereich der Verschlussteilwandung 5.2 auf. Insbesondere weist die Verschlussteilwandung 5.2 mehrere Deformierungsbereiche 8 und zwischen zwei benachbarten Deformierungsbereichen 8 jeweils einen Übergangsbereich 9 auf. Die Deformierungsbereiche 8 sind diejenigen Bereiche der Verschlussteilwandung 5.2, die sich von dem Ventilsitz abheben können, um ein Durchfließen des Rückschlagventils 1 vom Einlass 2 zum Auslass 3 zu ermöglichen. Dieses partielle Abheben der Verschlussteilwandung 5.2 ist beispielhaft in den Figuren 4 bis 7 durch die strichlierten Linien dargestellt.

Die Deformierungsbereiche 8 sind konvex gewölbt und weisen ohne Anliegen äußerer Kräfte auf das Verschlussteil 5 einen größeren Krümmungsradius auf als die ebenfalls konvex gewölbten Übergangsbereiche 9 (wobei sich "konvex" auf eine Wölbung nach außen, d.h. von der Mittellängsachse MLA weg bezieht). Dadurch wird erreicht, dass sich die Verschlussteilwandung 5.2 bei Anliegen eines Fluiddrucks zwischen dem Einlass 2 und dem Auslass 3 lediglich in den Deformierungsbereichen 8 von dem Ventilsitz, d.h. der Innenfläche 4.1.1 abhebt und nicht im Bereich der Übergangsbereiche 9. Das Rückschlagventil 1 ist vorzugsweise derart ausgebildet, dass die Übergangsbereiche 9 weiterhin an der Innenfläche 4.1.1 anliegend bleiben und dadurch eine Verdrehung des Verschlussteils 5 gegenüber dem ersten Ventilabschnitt 4 verhindert wird.

Vorzugsweise verbleiben die Übergangsbereiche 9 in entsprechenden Ausnehmungen an der Innenfläche 4.1.1 des ersten Ventilabschnitts 4, so dass sich durch die Rotationsunsymmetrie der Ausnehmung 4.1 (bezogen auf die Mittellängsachse MLA) eine Rotationssicherung des Verschlussteils 5 ergibt.

Wie insbesondere in Fig. 3 und den Figuren 8 bis 10 erkennbar, weist die Verschlussteilwandung 5.2 in den Deformierungsbereichen 8 zumindest partiell eine größere Wandstärke auf als in den Übergangsbereichen 9. Dadurch kann das Verformungsverhalten und die Lebensdauer des Verschlussteils 5 verbessert werden.

Wie in den Figuren 1 und 2 dargestellt, weist das Verschlussteil 5 an der Außenseite des Verschlussteilbodens 5.1, d.h. auf der dem Einlauf 2 zugewandten Seite einen Fortsatz 5.4 auf. Der Fortsatz 5.4 ist kegelartig oder kuppelartig mit abgerundeter Spitze ausgebildet. Der Fortsatz 5.4 verbessert das Umströmen des Verschlussteilbodens 5.1 und das Zuführen des Fluids zu den Überströmkanälen 7.

Wie in Fig. 3 und den Figuren 8 bis 10 zu erkennen ist, sind die Überströmkanäle 7 jeweils im Bereich der Deformierungsbereiche 8 vorgesehen, d.h. im Bereich der Übergangsbereiche 9 finden sich keine Überströmkanäle 7. Wie zuvor beschrieben, bewirkt das Einströmen des Fluids in die vorzugsweise radial nach innen hin offenen Überströmkanäle 7 eine örtlich definierte Druckbeaufschlagung der Deformierungsbereiche 8, so dass diese gezielt vom Dichtsitz abgehoben werden, während die Übergangsbereiche 9 an der Innenfläche 4.1.1 der Ausnehmung 4.1 anliegend bleiben. Die Anordnung der Überströmkanäle 7 unmittelbar an den Deformierungsbereichen 8 sorgt damit für eine definierte Verformung der Verschlussteilwandung 5.2 in den Deformierungsbereichen 8.

Um eine axiale Verschiebung des Verschlussteils 5 in dem ersten Ventilabschnitt zu verhindern, ist eine Fixiereinrichtung 10 vorgesehen. Die Fixiereinrichtung 10 ragt, wie in den Figuren 1 und 2 zu erkennen, in axialer Richtung in den von dem Verschlussteilboden 5.1 und der Verschlussteilwandung 5.2 umschlossenen Innenraum des Verschlussteils 5 hinein. Das freie Ende der Fixiereinrichtung 10 liegt dabei gegenüber der Innenseite des Verschlussteilbodens 5.1 an und sichert dadurch die Position des Verschlussteils 5 in dem ersten Ventilabschnitt 4.

Die Fixiereinrichtung 10 weist vorzugsweise zumindest einen ersten und einen zweiten Fixiereinrichtungsabschnitt 10.1, 10.2 auf. Der erste Fixiereinrichtungsabschnitt 10.1 ist beispielsweise zylindrisch ausgebildet und weist einen kleineren Außendurchmesser auf als der zweite Fixiereinrichtungsabschnitt 10.2 Dadurch lässt sich der erste Fixiereinrichtungsabschnitt 10.1 beabstandet zur Verschlussteilwandung 5.2 in den Innenraum des Verschlussteils 5 einschieben und gelangt mit dessen freien Ende zur Anlage gegenüber der Innenseite des Verschlussteilbodens 5.1. Der radiale Abstand des ersten Fixiereinrichtungsabschnitts 10.1 zur Verschlussteilwandung 5.2 ist derart gewählt, dass sich die Verschlussteilwandung 5.2 in den Deformierungsbereichen 8 von dem Ventilsitz abheben kann, ohne dass der Fixiereinrichtungsabschnitt 10.1 dies behindert.

Der zweite Fixiereinrichtungsabschnitt 10.2 ist dazu ausgebildet, die Fixiereinrichtung 10 lagemäßig gegenüber dem ersten und zweiten Ventilabschnitt 4, 6 zu fixieren. Diese Fixierung erfolgt beispielsweise derart, dass der zweite Fixiereinrichtungsabschnitt 10.2 dazu ausgebildet ist, zwischen dem ersten und zweiten Ventilabschnitt 4, 6 formschlüssig aufgenommen zu werden. Insbesondere kann der zweite Fixiereinrichtungsabschnitt 10.2 derart in eine Ausnehmung des ersten und/oder zweiten Ventilabschnitts 4, 6 eingesetzt werden, dass dadurch die Position der Fixiereinrichtung 10 in dem Rückschlagventil 1 gesichert ist.

Wie insbesondere in Figuren 3 bis 6 zu erkennen ist, weist der zweite Fixiereinrichtungsabschnitt 10.2 Durchlassöffnungen 11 auf, durch die hindurch das Fluid nach dem Passieren des Verschlussteils 5 zum Auslass 3 abfließen kann.

Vorzugsweise ist der Fixiereinrichtungsabschnitt 10.2 speichenradartig ausgebildet und weist zwischen einem außenseitig umlaufenden, geschlossenen Bereich mehrere Speichen auf, zwischen denen jeweils eine Durchlassöffnung 11 gebildet ist. Dadurch kann der Fixiereinrichtungsabschnitt 10.2 in vorteilhafter Weise durchflossen werden. Vorzugsweise ist die Anzahl der Speichen und die winkelmäßige Verteilung an die Anzahl und die winkelmäßige Verteilung der Übergangsbereiche 9 des Verschlussteils 5 angepasst. Dadurch wird erreicht, dass die Deformierungsbereiche 8, wie in den Figuren 4 bis 6 erkennbar, im Bereich der Durchlassöffnungen 11 zu liegen kommen und damit das Fluid direkt von der partiell abgehobenen Verschlussteilwandung 5.2 in die dahinter liegende Durchlassöffnung 11 geleitet wird.

Vorzugsweise ist auch die Fixiereinrichtung 10 und der zweite Ventilabschnitt 6 als Kunststoffspritzgussteil ausgebildet. Dadurch kann das Rückschlagventil 1 kostengünstig hergestellt werden. Die Verbindung des ersten und zweiten Ventilabschnitts 4, 6 kann beispielsweise durch Verpressen und/oder Verkleben erfolgen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Rückschlagventil
- 1.1: Fluidkanal
- 2: Einlass
- 3: Auslass
- 4: erster Ventilabschnitt
- 4.1: Ausnehmung
- 4.1.1: Innenfläche
- 4.1.2: Bodenbereich
- 4.2: Öffnung
- 5: Verschlussteil
- 5.1: Verschlussteilboden
- 5.2: Verschlussteilwandung
- 5.3: Verschlussteilrand
- 5.4: Fortsatz
- 6: zweiter Ventilabschnitt
- 7: Überströmkanal
- 8: Deformierungsbereich
- 9: Übergangsbereich
- 10: Fixiereinrichtung
- 10.1: erster Fixiereinrichtungsabschnitt
- 10.2: zweiter Fixiereinrichtungsabschnitt
- 11: Durchlassöffnung

- FR: Fließrichtung
- MLA: Mittellängsachse

## Patentansprüche

1. Rückschlagventil umfassend einen Einlass (2) und einen Auslass (3) und ein zwischen dem Einlass (2) und dem Auslass (3) angeordnetes, elastisch verformbares Verschlussteil (5), das dazu ausgebildet ist, ein Rückfließen des Fluids von dem Auslass (3) zu dem Einlass (2) zu verhindern, wobei ein erster Ventilabschnitt (4) einen Ventilsitz für das Verschlussteil (5) ausbildet, wobei das Verschlussteil (5) kappenartig ausgebildet ist und einen Verschlussteilboden (5.1) und eine Verschlussteilwandung (5.2) mit einem dem Verschlussteilboden gegenüberliegenden Verschlussteilrand (5.3) aufweist, wobei im ersten Ventilabschnitt (4) Überströmkanäle (7) vorgesehen sind, **dadurch gekennzeichnet, dass** die Überströmkanäle (7) derart ausgebildet sind, dass die Verschlussteilwandung (5.2) durch das Fluid vom Einlass (2) her über eine Teillänge umflossen und durch die Überströmkanäle (7) auf die Verschlussteilwandung (5.2) geleitet wird, so dass diese Verschlussteilwandung (5.2) zumindest abschnittsweise deformiert und damit vom Ventilsitz abgehoben wird und dass die Überströmkanäle (7) zumindest abschnittsweise entlang der den Ventilsitz bildenden Innenfläche des ersten Ventilabschnitts (4) verlaufen und zu dieser Innenfläche hin offen ausgebildet sind.

2. Rückschlagventil nach Anspruch 1, **dadurch gekennzeichnet, dass** das Verschlussteil (5) Deformierungsbereiche (8) aufweist, die dazu ausgebildet sind, sich bei Anliegen eines Fluiddrucks am Einlass (2) von dem Ventilsitz abzuheben.

3. Rückschlagventil nach einem der vorhergehenden Ansprüche, **dadurch gekennzeichnet, dass** der Ventilsitz und das Verschlussteil (5) in einer senkrecht zur Fließrichtung (FR) verlaufenden Querschnittsebene rotationsunsymmetrisch ausgebildet sind.

4. Rückschlagventil nach Anspruch 2 oder 3, **dadurch gekennzeichnet, dass** das Verschlussteil (5) in einer senkrecht zur Fließrichtung verlaufenden Querschnittsebene in den Deformierungsbereichen (8) konvexe Wölbungen mit einem größeren Radius als in den zwischen den Deformierungsbereichen liegenden Übergangsbereichen (9) aufweist.

5. Rückschlagventil nach einem der Ansprüche 2 bis 4, **dadurch gekennzeichnet, dass** die Deformierungsbereiche (8) zumindest teilweise eine größere Wandstärke aufweisen als zwischen den Deformierungsbereichen (8) liegende Übergangsbereiche (9).

6. Rückschlagventil nach einem der Ansprüche 2 bis 5, **dadurch gekennzeichnet, dass** das Verschlussteil (5) derart ausgebildet ist, dass beim Abheben der Deformierungsbereiche (8) die Übergangsbereiche (9) zumindest partiell an der den Ventilsitz bildenden Innenfläche des ersten Ventilabschnitts (4) anliegen.

7. Rückschlagventil nach einem der vorhergehenden Ansprüche, **dadurch gekennzeichnet, dass** das Verschlussteil (5) einen Reuleaux-Dreieck-ähnlichen Querschnitt mit abgerundeten Ecken aufweist.

8. Rückschlagventil nach einem der vorhergehenden Ansprüche, **dadurch gekennzeichnet, dass** das Verschlussteil (5) ohne äußere Krafteinwirkung an die den Ventilsitz bildende Innenfläche des ersten Ventilabschnitts (4) formangepasst ist.

9. Rückschlagventil nach einem der vorhergehenden Ansprüche, **dadurch gekennzeichnet, dass** die Überströmkanäle (7) im Bereich der Deformierungsbereiche (8) angeordnet sind, und zwar derart, dass jeweils zumindest ein Überströmkanal (7) direkt benachbart zu einem Deformierungsbereich (8) liegt.

10. Rückschlagventil nach einem der vorhergehenden Ansprüche, **dadurch gekennzeichnet, dass** eine Fixiereinrichtung (10) mit zumindest einem ersten und einem zweiten Fixiereinrichtungsabschnitt (10.1, 10.2) vorgesehen ist, wobei der erste Fixiereinrichtungsabschnitt (10.1) zumindest teilweise in einen Innenraum des kappenartig ausgebildeten Verschlussteils (5) hineinreicht und mit seinem freien Ende gegenüber der Innenseite des Verschlussteilbodens (5.1) anliegt.

11. Rückschlagventil nach Anspruch 10, **dadurch gekennzeichnet, dass** der zweite Fixiereinrichtungsabschnitt (10.2) radial gegenüber dem ersten Fixiereinrichtungsabschnitt (10.1) übersteht und zur Positionierung der Fixiereinrichtung (10) im Fluidkanal (1.1) des Rückschlagventils (1) ausgebildet ist.

12. Rückschlagventil nach Anspruch 10 oder 11, **dadurch gekennzeichnet, dass** der zweite Fixiereinrichtungsabschnitt (10.2) Durchlassöffnungen (11) aufweist, über die das Fluid durch die Fixiereinrichtung (10) hindurchfließen kann.

13. Rückschlagventil nach einem der vorhergehenden Ansprüche, **dadurch gekennzeichnet, dass** das Verschlussteil (5) einen außenseitig am Verschlussteilboden (5.1) angeordneten und in Richtung des Einlasses (2) abstehenden Fortsatz (5.4) aufweist.

14. Rückschlagventil nach einem der vorhergehenden Ansprüche, **dadurch gekennzeichnet, dass** der erste Ventilabschnitt (4) und/oder die Fixiereinrichtung (10) Kunststoffspritzgussteile sind.

## Claims

1. Check valve comprising an inlet (2) and an outlet (3) and an elastically deformable closure part (5), which is arranged between the inlet (2) and the outlet (3) and is designed to prevent the fluid from flowing from the outlet (3) back to the inlet (2), wherein a first valve portion (4) forms a valve seat for the closure part (5), wherein the closure part (5) has of cap-like design and comprises a closure part base (5.1) and a closure part wall (5.2) with a closure part edge (5.3) opposite to the closure part base, wherein overflow channels (7) are provided in the first valve portion (4), **characterized in that** the overflow channels (7) are designed in such a way that the fluid flows around the closure part wall (5.2) from the inlet (2) over a partial length and is passed through the overflow channels (7) to the closure part wall (5. 2) so that this closure part wall (5.2) is deformed at least in sections and thus lifted from the valve seat and that the overflow channels (7) extend at least in sections along the inner surface of the first valve portion (4) forming the valve seat and are open towards this inner surface.

2. Check valve according to claim 1, **characterized in that** the closure part (5) has deformation regions (8), which are designed to lift from the valve seat when a fluid pressure is applied to the inlet (2).

3. Check valve according to any one of the preceding claims, **characterized in that** the valve seat and the closure part (5) are designed to be rotationally asymmetrical in a cross-sectional plane extending perpendicular to the direction of flow (FR).

4. Check valve according to claim 2 or 3, **characterized in that**, in a cross-sectional plane extending perpendicular to the direction of flow, the closure part (5) has, in the deformation regions (8), convex curvatures having a larger radius than in the transition regions (9) located between the deformation regions.

5. Check valve according to any one of claims 2 to 4, **characterized in that** the deformation regions (8) have at least partially a greater wall thickness than transition regions (9) located between the deformation regions (8).

6. Check valve according to any one of claims 2 to 5, **characterized in that** the closure part (5) is designed in such a way that when the deformation regions (8) are lifted off, the transition regions (9) rest at least partially against the inner surface of the first valve portion (4) forming the valve seat.

7. Check valve according to any one of the preceding claims, **characterized in that** the closure part (5) has a Reuleaux triangle-like cross-section with rounded corners.

8. Check valve according to any one of the preceding claims, **characterized in that** without the application of external force the closure part (5) is adapted in shape to the inner surface of the first valve portion (4) forming the valve seat.

9. Check valve according to any one of the preceding claims, **characterized in that** the overflow channels (7) are arranged in the area of the deformation regions (8) in such a way that at least one overflow channel (7) is located directly adjacent to a deformation region (8) in each case.

10. Check valve according to any one of the preceding claims, **characterized in that** a fixing device (10) having at least a first and a second fixing device portion (10.1, 10.2) is provided, the first fixing device portion (10.1) extending at least partially into an interior of the cap-like closure part (5) and resting with its free end opposite to the inside of the closure part base (5.1).

11. Check valve according to claim 10, **characterized in that** the second fixing device portion (10.2) projects radially over to the first fixing device portion (10.1) and is designed to position the fixing device (10) in the fluid channel (1.1) of the non-return valve (1).

12. Check valve according to claim 10 or 11, **characterized in that** the second fixing device portion (10.2) has passage openings (11) via which the fluid can flow through the fixing device (10).

13. Check valve according to any one of the preceding claims, **characterized in that** the closure part (5) has an extension (5.4), which is arranged on the outside at the closure part base (5.1) and projects in the direction of the inlet (2).

14. Check valve according to any one of the preceding claims, **characterized in that** the first valve portion (4) and/or the fixing device (10) are injection-molded plastic parts.

## Revendications

1. Clapet anti-retour comprenant une entrée (2) et une sortie (3) et un élément d'obturation (5) élastiquement déformable disposé entre l'entrée (2) et la sortie (3) et conçu pour empêcher un retour du fluide de la sortie (3) vers l'entrée (2), une première partie de clapet (4) formant un siège de clapet pour l'élément d'obturation (5), l'élément d'obturation (5) étant conçu en forme de capuchon et comprenant un fond d'élément d'obturation (5.1) et une paroi d'élément d'obturation (5.2) qui présente un bord d'élément d'obturation (5.3) opposé au fond d'élément d'obturation, des canaux de débordement (7) étant prévus dans la première partie de clapet (4), **caractérisé en ce que**
les canaux de débordement (7) sont conçus de telle sorte que la paroi d'élément d'obturation (5.2) est entourée sur une partie de sa longueur par le fluide provenant de l'entrée (2), dirigé vers la paroi d'élément d'obturation (5.2) à travers les canaux de débordement (7), de sorte que ladite paroi d'élément d'obturation (5.2) est déformée au moins localement et est ainsi soulevée du siège de clapet et que les canaux de débordement (7) s'étendent au moins localement le long de la surface intérieure, formant le siège de clapet, de la première partie de clapet (4) et sont ouverts vers ladite surface intérieure.

2. Clapet anti-retour selon la revendication 1,
**caractérisé en ce que** l'élément d'obturation (5) présente des zones de déformation (8) conçues pour se soulever du siège de clapet en présence d'une pression de fluide à l'entrée (2).

3. Clapet anti-retour selon l'une des revendications précédentes, **caractérisé en ce que** le siège de clapet et l'élément d'obturation (5) sont conçus de manière à ne pas être à symétrie de révolution dans un plan de section transversale perpendiculaire à la direction d'écoulement (FR).

4. Clapet anti-retour selon la revendication 2 ou 3,
**caractérisé en ce que** l'élément d'obturation (5) présente, dans un plan de section transversale perpendiculaire à la direction d'écoulement, dans les zones de déformation (8), des bombements convexes ayant un rayon supérieur à celui des zones de transition (9) situées entre les zones de déformation.

5. Clapet anti-retour selon l'une des revendications 2 à 4,
**caractérisé en ce que** les zones de déformation (8) présentent au moins partiellement une épaisseur de paroi supérieure à celle des zones de transition (9) situées entre les zones de déformation (8).

6. Clapet anti-retour selon l'une des revendications 2 à 5,
**caractérisé en ce que** l'élément d'obturation (5) est conçu de telle sorte que, lors du soulèvement des zones de déformation (8), les zones de transition (9) s'appliquent au moins partiellement contre la surface intérieure, formant le siège de clapet, de la première partie de clapet (4).

7. Clapet anti-retour selon l'une des revendications précédentes, **caractérisé en ce que** l'élément d'obturation (5) présente une section transversale du type triangle de Reuleaux à coins arrondis.

8. Clapet anti-retour selon l'une des revendications précédentes, **caractérisé en ce que** l'élément d'obturation (5) est adapté à la forme de la surface intérieure, formant le siège de clapet, de la première partie de clapet (4), sans application d'une force externe.

9. Clapet anti-retour selon l'une des revendications précédentes, **caractérisé en ce que** les canaux de débordement (7) sont disposés au niveau des zones de déformation (8), et ce de telle sorte qu'au moins un canal de débordement (7) respectif est directement adjacent à une zone de déformation (8).

10. Clapet anti-retour selon l'une des revendications précédentes, **caractérisé en ce qu'**il est prévu un dispositif de fixation (10) ayant au moins une première et une deuxième partie de dispositif de fixation (10.1, 10.2), la première partie de dispositif de fixation (10.1) pénétrant au moins partiellement dans un espace intérieur de l'élément d'obturation (5), réalisé en forme de capuchon, et s'appliquant par son extrémité libre contre la face intérieure du fond d'élément d'obturation (5.1).

11. Clapet anti-retour selon la revendication 10,
**caractérisé en ce que** la deuxième partie de dispositif de fixation (10.2) dépasse radialement par rapport à la première partie de dispositif de fixation (10.1) et est conçue pour positionner le dispositif de fixation (10) dans le canal de fluide (1.1) du clapet anti-retour (1).

12. Clapet anti-retour selon la revendication 10 ou 11,
**caractérisé en ce que** la deuxième partie de dispositif de fixation (10.2) présente des ouvertures de passage (11) permettant au fluide de s'écouler à travers le dispositif de fixation (10).

13. Clapet anti-retour selon l'une des revendications précédentes, **caractérisé en ce que** l'élément d'obturation (5) présente un prolongement (5.4) disposé du côté extérieur sur le fond d'élément d'obturation (5.1) et faisant saillie en direction de l'entrée (2).

14. Clapet anti-retour selon l'une des revendications précédentes, **caractérisé en ce que** la première partie de clapet (4) et/ou le dispositif de fixation (10) sont des pièces en matière plastique moulées par injection.
